# EUROPÄISCHE PATENTSCHRIFT

(11) **EP 1 517 737 B1**
(45) Veröffentlichungstag und Bekanntmachung des Hinweises auf die Patenterteilung: **22.11.2006**
(21) Anmeldenummer: 03762434.3
(22) Anmeldetag: 01.07.2003
(51) Int. Cl.: B01D 46/50, B01D 53/92, F01N 3/027

(54) **PLASMA-RUSSFILTER**
PLASMA PARTICULATE FILTER
FILTRE A PARTICULES AU PLASMA

(30) Priorität: 03.07.2002 DE 10229881
(43) Veröffentlichungstag der Anmeldung: 30.03.2005
(73) Patentinhaber: SIEMENS AKTIENGESELLSCHAFT, 80333 München (DE)
(72) Erfinder: HAMMER, Thomas, 91334 Hemhofen (DE)
(86) Internationale Anmeldenummer: PCT/DE2003/002187
(87) Internationale Veröffentlichungsnummer: WO 2004/004869

(56) Entgegenhaltungen:
- DE-A- 3 705 979
- DE-A- 3 715 174
- DE-A- 4 230 631
- DE-C- 10 057 862
- PATENT ABSTRACTS OF JAPAN vol. 2000, no. 23, 10. Februar 2001 (2001-02-10) & JP 2001 173427 A (TOYOTA CENTRAL RES & DEV LAB INC), 26. Juni 2001 (2001-06-26)

## Beschreibung

Die Erfindung bezieht sich auf ein Plasma-Rußfilter gemäß dem Oberbegriff des Patentanspruches 1. Ein solcher Rußfilter ist Gegenstand der DE 100 57 862 C1.

Mit vorgenanntem Patent wird ein Verfahren zur Verminderung kohlenstoffhaltiger Partikelemissionen von Dieselmotoren unter Schutz gestellt, bei dem die im Abgas enthaltenen Rußpartikel an Filteroberflächen abgeschieden werden, wobei zwecks Regeneration des Filters die abgeschiedenen Partikel oxidiert werden und die Regeneration durch nichtthermische, elektrische Oberflächengleitentladungen an den mit Rußpartikeln belegten Oberflächen erfolgt.

In der DE 100 57 862 C1 sind verschiedene Geometrien zum Betrieb einer derartigen Anordnung beschrieben, die auf dem Prinzip von sogenannten Wandflussfiltern basieren. Diese Filter bestehen aus parallelen Kanälen mit viereckigem Querschnitt, die wechselseitig jeweils an der Auslassseite und an der Einlassseite des Abgases verschlossen sind. Dadurch ergibt sich eine Aufteilung in Einlasskanäle für das rußbeladene und Auslasskanäle für das gefilterte Abgas. Der Ruß wird auf den Innenwänden der einlassseitig offenen Kanäle abgeschieden und dort durch Sauerstoff- und Hydroxyl-Radikale oxidiert, die in unmittelbarer Wandnähe von nichtthermischen Oberflächengleitentladungs-Plasmen erzeugt werden.

In der DE 100 57 862 C1 wird in naheliegender Weise davon ausgegangen, dass zur Erzeugung von Oberflächengleitentladungen in einem Filterkanal an jeder seiner Kanten eine Elektrode angebracht ist. Die zur Plasmaerzeugung erforderlichen Elektroden lassen sich dabei entweder in das Filtermaterial einbetten oder auf dem Filtermaterial so aufbringen, dass auf jeden Fall zwischen einer mit Hochspannung verbundenen Elektrode und der mit Masse verbundenen Gegenelektrode eine Schicht hoher dielektrischer Festigkeit liegt. Durch die dort beschriebene Einbettung der Elektroden lassen sich solche Oberflächengleitentladungen jedoch nur auf beiden Seiten der Zellwände generieren, während der Ruß nur auf einer Seite abgeschieden wird. Damit ist der spezifische Energieverbrauch für die Regeneration doppelt so hoch wie eigentlich erforderlich.

Dem Abgas ausgesetzte Elektroden hingegen, die dort in Kombination mit eingebetteten Elektroden für den bevorzugten Betrieb von Oberflächengleitentladungen auf einer Seite der Wand vorgeschlagen werden, sind durch den Kontakt mit dem Abgas Erosionsprozessen ausgesetzt, die durch Gasentladungsprozesse noch verstärkt werden können. Diese Erosionsprozesse können nicht nur die Lebensdauer speziell der Elektroden, sondern über die Entstehung von Metalloxiden auch die Lebensdauer der Keramik beeinträchtigen.

Ein weiterer Nachteil ist, dass die große Zahl der Elektroden - und zwar vier je Einlasskanal - Größe und Gewicht des Plasmarußfilters gegenüber einem herkömmlichen Filter wesentlich erhöht.

Aus der Literatur sind Geometrien zum Betrieb dielektrisch behinderter Entladungen in keramischen Wabenkörpern bekannt (siehe z.B. EP 0 840 838 B1), in denen durch eine innenliegende Hochspannungs- und eine außenliegende Masseelektrode ein zylindrisches, viele Kanäle enthaltendes Volumen angeregt werden kann. Dadurch kann aber weder zwischen Ein- und Auslasskanälen eines Rußfilters differenziert werden, noch können gezielt Oberflächengleitentladungen erzeugt werden. Außerdem ist wegen der großen Schlagweite zwischen den Elektroden eine hohe Spannungsamplitude von über 20 kV erforderlich, die im Kraftfahrzeug zu Problemen führen kann.

Ausgehend von letzterem Stand der Technik ist es Aufgabe der Erfindung, ein Plasma-Rußfilter anzugeben, bei dem durch eine geeignete Geometrie die oben angeführten Nachteile vermieden werden.

Die Aufgabe ist erfindungsgemäß durch die Merkmale des Patentanspruches 1 gelöst. Weiterbildungen sind in den abhängigen Ansprüchen angegeben.

Mit der Erfindung ist ein aus wechselseitig verschlossenen länglichen Kanälen mit beliebigem Querschnitt bestehender Wandflussfilter geschaffen, dessen mit Ruß belegte Wände durch Oberflächengleitentladungen regeneriert werden. Dabei brennen nunmehr die Oberflächengleitentladungen bedingt durch die Anordnung der in das Filtermaterial eingebetteten und damit vor Erosion geschützten Elektroden bevorzugt auf der mit Ruß belegten Einlassseite des Filters. Vorteilhafterweise werden bei der angegebenen Geometrie mit zweistrahliger Symmetrie pro Einlasskanal nur zwei Elektroden zur Erzeugung der Oberflächengleitentladungen benötigt.

Ausgangspunkt der Erfindung ist ein aus matrixartig angeordneten länglichen Kanälen mit viereckigem Querschnitt bestehender Wandflussfilter. Die Kanäle sind längs einer Zeile oder einer Spalte wechselseitig verschlossenen, so dass sich Einlass- und Auslasskanäle abwechseln.

Durch die erfindungsgemäße Elektrodenanordnung wird sichergestellt, dass die Verteilung des elektrischen Feldes in den einzelnen Zellen des Plasma-Rußfilters die Zündung von nichtthermischen Oberflächengleitentladungen in einzelnen Zellen ermöglicht. Dabei werden die dielektrischen Eigenschaften des Wandmaterials des keramischen Rußfilters ausgenutzt, die das Feld in Hohlräumen zwischen den Elektroden konzentriert. Überraschenderweise ergibt sich durch eine Verminderung der Elektrodenzahl pro Einlasskanal von 4 auf 2 nicht etwa eine Verschlechterung der elektrischen Feldverteilung hinsichtlich der Erzeugung von Oberflächengleitentladungen. Wesentlich dafür ist die Anordnung der Elektroden an diagonal gegenüberliegenden Kanten des viereckigen Kanalquerschnittes, wobei notwendigerweise über ihre nicht mit Elektroden versehenen Kanten benachbarte Einlasskanäle in gleicher Polarität beschaltet werden müssen.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
Figur 1 und Figur 3 Querschnitte von Plasmafilterelementen mit Ein- und Auslasskanälen und zugehörigen Elektroden,
Figur 2 und Figur 4 berechnete Feldstärkeverteilungen bei den Anordnungen gemäß Figur 1 und 3 sowie
Figur 5 Querschnitte eines Einlasskanals mit zweistrahliger Symmetrie und dessen Variation.

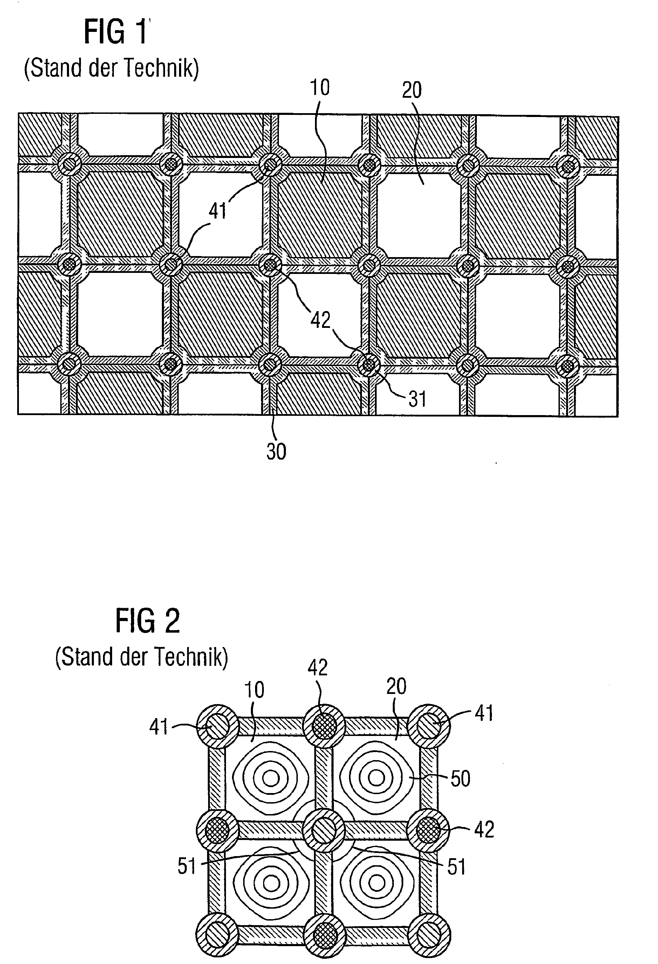

Die Figuren werden nachfolgend teilweise gemeinsam beschrieben. Insbesondere zu Figur 1 wird im Einzelnen auf die Patentschrift DE 100 57 862 C1 verwiesen.

In letzterem Patent wird ein Verfahren und zugehörige Anordnungen zur Verminderung kohlenstoffhaltiger Partikelemissionen von Dieselmotoren unter Schutz gestellt, bei denen Oberflächengleitentladungen zum Einsatz kommen. In den in der DE 100 57 862 C1 im Einzelnen beschriebenen Figuren 1 bis 5 sowie 7 bis 12 sind Wandflussfilter aus keramischem Material aus wechselseitig verschlossenen länglichen Kanälen mit speziell viereckigem Querschnitt, in deren Eckpunkte jeweils Elektroden eingebaut sind, dargestellt.

Figur 1 zeigt im Querschnitt eine derartige Elektrodenanordnung in einem Plasmafilterelement herkömmlicher Art mit vier in Filtermaterial eingebetteten Elektroden je Kanal.

Im Einzelnen ist ein Einlaßkanal mit 10 und ein Auslasskanal mit 20 bezeichnet. Einlasskanal 10 und Auslasskanal 20 sind durch poröse Wände 30 aus spezifischem keramischen Material getrennt. In den Wänden 30 sind jeweils an den Kanten der Kanäle 10 Elektroden eingebaut, die jeweils paarweise nebeneinander als Hochspannungselektrode 41 und geerdete Elektrode 42 dienen. Um ausreichende dielektrische Festigkeit zu gewährleisten, sind die aus elektrisch leitfähigem Material gefertigten Elektroden 41 und 42 jeweils von einer elektrisch isolierenden Barrierenschicht 43 umgeben, die aus Gründen der Hochspannungsfestigkeit im Gegensatz zum Filtermaterial der Wände 30 niedrige Porosität aufweist.

Figur 2 zeigt die für die Ausbildung von Oberflächengleitentladungen wichtige Verteilung der elektrischen Feldstärke für eine an den Hochspannungselektroden anliegende Spannung von 10 kV bei einem quadratischen Kanalquerschnitt von 2 x 2 mm² im Querschnitt der Anordnung gemäß Figur 1. Mit 50 sind errechnete Feldminima in der Anordnung gemäß Figur 1 bezeichnet. Diese Minima finden sich aufgrund der quadrupolartigen Anordnung der Elektroden jeweils auf den Symmetrieachsen sowohl der Ein- als auch der Auslasskanäle. Bereiche erhöhter elektrischer Feldstärke 51, in denen elektrische Gasentladungen bevorzugt zünden werden, finden sich in der Nähe der Kanalwände sowohl der Ein- als auch der Auslasskanäle.

Insgesamt ist aus Figur 2 erkennbar, dass sich aufgrund der Symmetrie in den Auslasskanälen 20 die gleiche elektrische Feldverteilung wie in den Einlasskanälen 10 ergibt. Zur Rußoxidation im Wandflussfilter werden aber die Bereiche erhöhter elektrischer Feldstärke tatsächlich nur in den Einlasskanälen benötigt.

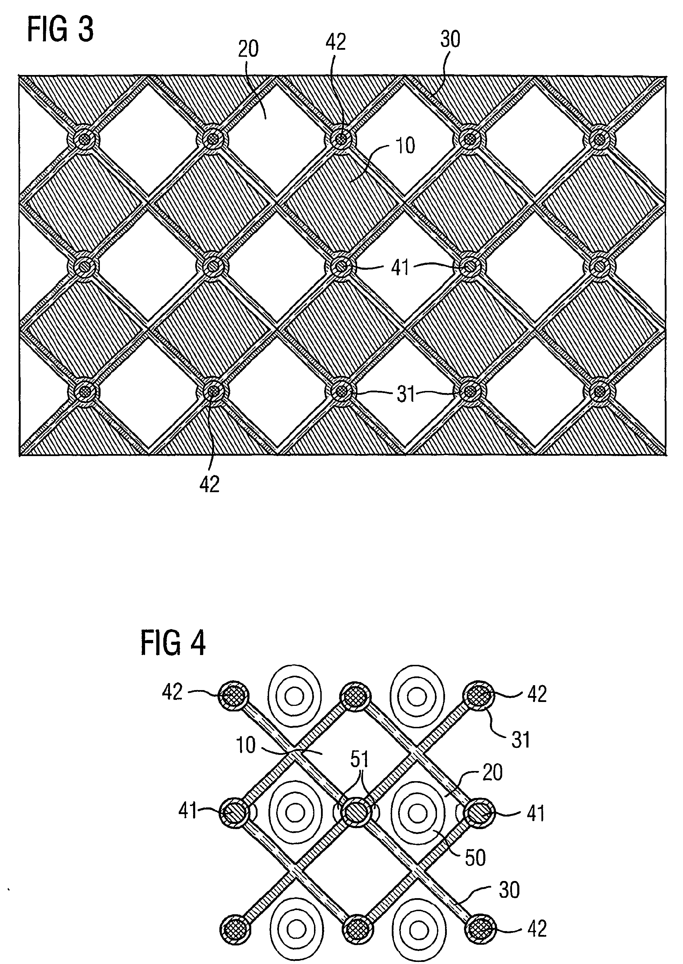

Figur 3 zeigt eine Elektrodenanordnung zur selektiven Erzeugung von Gasentladungen in den Einlasskanälen im Querschnitt. Wesentlicher Unterschied zu Figur 1 ist die rautenförmige Anordnung der Einlasskanäle 10 und der Auslasskanäle 20, welche sich aus einer Drehung der Struktur gemäß Figur 1 um 45° ergibt. Weiterer Unterschied zum Stand der Technik ist, dass an den nunmehr rautenförmig ausgebildeten Einlasskanälen jeweils in der Senkrechte an gegenüberliegenden Ecken der Raute Elektroden 40 vorhanden sind, die jeweils paarweise als Hochspannungselektrode 41 und als Masseelektrode 42 ausgeführt sind. Auch hier ist bei einem porösen Filtermaterial wieder eine Barrierenschicht 43 vorgesehen.

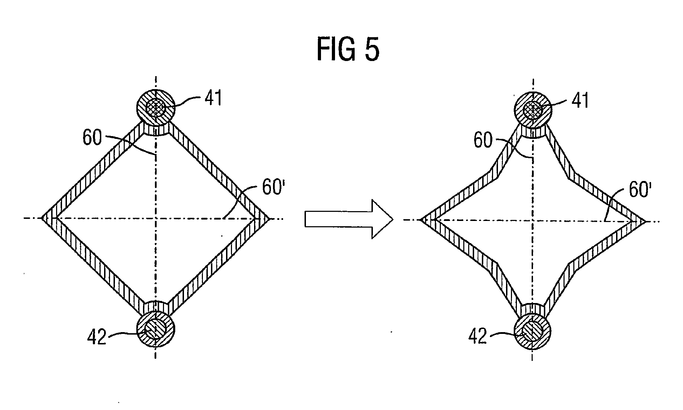

Figur 4 zeigt die vorteilhafte Verteilung des elektrischen Feldes der Anordnung gemäß Figur 3, die die Zündung von Gasentladungen innerhalb der Einlasskanäle bevorzugt ermöglicht. Aus dieser berechneten Darstellung ergibt sich, dass im Vergleich zu Figur 2 die Einlasskanäle 10 über nahezu den gesamten Querschnitt eine erhöhte, für die Zündung von Gasentladungen ausreichende elektrische Feldstärke aufweisen, während in den Auslasskanälen 20 nur in Elektrodennähe aufgrund leicht erhöhter elektrischer Felder mit der Zündung von Gasentladungen zu rechnen ist. Ansonsten sind wieder Feldminima 50 entsprechend Figur 2 vorhanden.

Bevorzugte Ansatzpunkte von Gasentladungen in den Einlasskanälen 10 liegen aufgrund der dort besonders stark erhöhten elektrischen Feldstärke zuerst in Elektrodennähe. Da während des Betriebes der Gasentladung dort jedoch elektrische Ladungsträger gespeichert werden und damit die elektrischen Felder dort reduziert werden, gleiten die bevorzugten Ansatzpunkte der Gasentladungen sukzessive auf den Wänden der Einlasskanäle 10 entlang in Richtung auf den Mittenbereich, bis die Wände soweit mit Oberflächenladungen belegt sind, dass keine weiteren Gasentladungen mehr gezündet werden können.

Letzterer Prozess ist mit der Ausbildung von Oberflächengleitentladungen verbunden. Obwohl die anfängliche Feldverteilung Volumen- und Oberflächengleitentladungen gleichermaßen ermöglicht, wird auf diese Weise ein nicht unwesentlicher Teil der elektrischen Energie in Oberflächengleitentladungen umgesetzt. Gleichzeitig wird der Betrieb von Gasentladungen in den Auslasskanälen weitgehend unterdrückt. Damit wird bestätigt, dass mit der Anordnung gemäß Figur 3 ein gegenüber Figur 1, die dem Stand der Technik entspricht, verbessertes Ergebnis für die Realisierung eines Plasma-Russfilters mit Einsatz von Oberflächengleitentladungen zur Oxidation des Rußes vorliegt.

Bei der Anordnung gemäß Figur 3 ergibt sich gegenüber Figur 1 nicht nur eine für die effiziente Nutzung der elektrischen Energie vorteilhafte elektrische Feldverteilung, sondern auch eine Verringerung des Material- und Kostenaufwandes durch reduzierte Elektrodenzahl pro Filtervolumen und -Fläche und gleichzeitig eine verringerte elektrische Kapazität, die sich durch vereinfachte Auslegung von Hochspannungsnetzteilen für die elektrische Anregung des Plasma-Rußfilters kostensenkend auswirkt. Wesentlich dafür ist die Anordnung der Elektroden an diagonal gegenüberliegenden Kanten des viereckigen Kanalquerschnittes, wobei über ihre nicht mit Elektroden versehenen Kanten benachbarte Einlasskanäle notwendigerweise in gleicher Polarität beschaltet werden müssen.

Figur 5 zeigt als Ausschnitt aus Figur 3 links den rautenartigen Querschnitt eines einzelnen Einlasskanals mit Elektrode 41, Gegenelektrode 42 und zwei Achsen 60 und 60', die eine zweistrahlige Symmetrie definieren. Diese Elemente sind für Funktionsfähigkeit des Filters von Bedeutung, wobei die Elektroden 41 und 42 durch die Achse 60 als eine Symmetrielinie verbunden sind.

Es ist offensichtlich, dass das beschriebene Konzept auf andere Kanalquerschnitte übertragbar ist. Ausgehend von der in Figur 3 gezeigten Gesamtgeometrie und der spezifischen Symmetrie gemäß Figur 5 hält man die Elektroden 41 und 42 sowie die Verbindungsachse 60 zwischen den Elektroden 41 und 42 als erste Symmetrielinie fest und verformt den Kanalquerschnitt symmetrisch bezüglich dieser Achse. Bei Berücksichtigung der zweiten Symmetrielinie ergibt sich beispielsweise eine Sternform im rechten Bereich von Figur 5, bei der die für die Rußablagerung wirksame Wandfläche im Einlasskanal gegenüber Figur 3 vergrößert ist.

Berücksichtigt man die Geometrie entsprechend Figur 5, werden die Auslasskanäle komplementär entsprechend verformt, so dass sich wieder eine vollständige Bedeckung des Querschnittes mit Ein- und Auslasskanälen ergibt. Im Prinzip ist jede Umwandlung eines Vierecks in ein nxViereck mit n≥2 möglich.

## Patentansprüche

1. Plasma-Rußfilter auf der Grundlage eines Wandflussfilters, bestehend aus wechselseitig verschlossenen länglichen Einlass- und Auslasskanälen aus keramischem Filtermaterial, wobei Rußpartikel an den Filteroberflächen der Einlasskanäle abgeschieden und dort zwecks Regeneration des Filters durch Einwirkung dielektrisch behinderter Oberflächengleitentladungen oxidiert werden, **gekennzeichnet durch** die Kombination folgender Merkmale:
- die Kanäle (10, 20) haben einen Querschnitt mit zweistrahliger Symmetrie
- zur Erzeugung der Oberflächengleitentladungen sind pro Einlasskanal (10) genau zwei Elektroden (41, 42) unterschiedlicher Polarität vorhanden, die auf einer der Symmetrielinien (60, 60') liegen.

2. Plasma-Rußfilter nach Anspruch 1, **dadurch gekennzeichnet, dass** die Elektroden (41, 42) in das Filtermaterial (30) eingebettet und damit vor Erosion geschützt sind.

3. Plasma-Rußfilter nach einem der vorhergehenden Ansprüche, **dadurch gekennzeichnet , dass** die Elektroden (41, 42) in ein elektrisch isolierendes Barrierenmaterial (43) niedriger Porosität eingebettet sind.

4. Plasma-Rußfilter nach einem der vorhergehenden Ansprüche, **dadurch gekennzeichnet , dass** die Oberflächengleitentladungen selektiv auf der mit Ruß belegten Einlassseite des Wandflussfilters mit Einlasskanal (10) und Auslasskanal (20) brennen.

5. Plasma-Rußfilter nach einem der vorhergehenden Ansprüche, **dadurch gekennzeichnet , dass** die Kanäle (10, 20) mit ihrem Querschnitt in zweistrahliger Symmetrie eine Viereckgeometrie haben, wobei die beiden Elektroden (41, 42) an gegenüberliegenden Ecken der Viereckgeometrie angeordnet sind.

6. Plasma-Rußfilter nach Anspruch 5, **dadurch gekennzeichnet, dass** die Viereckgeometrie eine vertikal orientierte Raute ist.

7. Plasma-Rußfilter nach Anspruch 6, wobei Elektroden an diagonal gegenüberliegenden Ecken von mehreren benachbarten rautenförmigen Kanalquerschnitten angeordnet sind, **dadurch gekennzeichnet , dass** die Elektroden (41, 42) an den Ecken benachbarter Einlasskanäle (10) in gleicher Polarität beschaltet sind.

8. Plasma-Rußfilter nach einem der Ansprüche 1 bis 5, **dadurch gekennzeichnet , dass** der Querschnitt des Einlasskanals (10) mit zweistrahliger Geometrie eine (nx4)-eckige Geometrie mit n≥2 hat, die durch Verformung des viereckförmigen Querschnitts des Einlasskanals (10) bei Festhalten der Elektroden (41, 42) und der ersten Symmetrielinie (60) erhalten wird (Fig. 5).

## Claims

1. Plasma particulate filter based on a wall flow filter, comprising elongate inlet and outlet passages which are closed off on alternate sides and are made from ceramic filter material, particulates being deposited on the filter surfaces of the inlet passages, where they are oxidized by the action of dielectric barrier sliding surface discharges in order to regenerate the filter, **characterized by** the combination of the following features:
the passages (10, 20) have a cross section with two-line symmetry
to generate the sliding surface discharges there are precisely two electrodes (41, 42) of different polarity, lying on one of the lines of symmetry (60, 60'), per inlet passage (10).

2. Plasma particulate filter according to Claim 1, **characterized in that** the electrodes (41, 42) are embedded in the filter material (30) and are thereby protected against erosion.

3. Plasma particulate filter according to one of the preceding claims, **characterized in that** the electrodes (41, 42) are embedded in an electrically insulating barrier material (43) of low porosity.

4. Plasma particulate filter according to one of the preceding claims, **characterized in that** the sliding surface discharges burn selectively on the inlet side, which is covered with particulates, of the wall flow filter with inlet passage (10) and outlet passage (20).

5. Plasma particulate filter according to one of the preceding claims, **characterized in that** the cross section of the passages (10, 20) in two-line symmetry has a quadrilateral geometry, the two electrodes (41, 42) being arranged at opposite corners of the quadrilateral geometry.

6. Plasma particulate filter according to Claim 5, **characterized in that** the quadrilateral geometry is a vertically oriented diamond.

7. Plasma particulate filter according to Claim 6, in which electrodes are arranged at diagonally opposite corners of a plurality of adjacent diamond-shaped passage cross sections, **characterized in that** the electrodes (41, 42) at the corners of adjacent inlet passages (10) are connected so as to have the same polarity.

8. Plasma particulate filter according to one of Claims 1 to 5, **characterized in that** the cross section of the inlet passage (10) with two-line geometry has a geometry with (nx4) corners, where n ≥ 2, which is obtained by deformation of the quadrilateral cross section of the inlet passage (10) while keeping the electrodes (41, 42) and the first line of symmetry (60) in place (Fig. 5).

## Revendications

1. Filtre à particules au plasma, sur la base d'un filtre de surface, composé de canaux oblongs d'entrée et de sortie réciproquement fermés en matière céramique filtrante, des particules de suie étant séparées sur les surfaces de filtration des canaux d'entrée et y étant oxydées pour la régénération du filtre sous l'effet de décharges superficielles glissantes diélectriquement entravées,
**caractérisé par** la combinaison de caractéristiques suivantes :
- les canaux (10, 20) ont une section transversale avec une symétrie à double faisceau,
- pour créer les décharges superficielles glissantes, exactement deux électrodes (41, 42) de polarité différente, qui se situent sur l'une des lignes de symétries (60, 60'), sont présentes pour chaque canal d'entrée (10).

2. Filtre à particules au plasma selon la revendication 1, **caractérisé en ce que** les électrodes (41, 42) sont noyées dans la matière filtrante (30) et sont donc protégées contres l'érosion.

3. Filtre à particules au plasma selon l'une quelconque des revendications précédentes, **caractérisé en ce que** les électrodes (41, 42) sont noyées dans une matière isolante électrique formant barrière (43) de faible porosité.

4. Filtre à particules au plasma selon l'une quelconque des revendications précédentes, **caractérisé en ce que** les décharges superficielles glissantes se consument de façon sélective du côté de l'entrée garni de suie du filtre de surface comportant canal d'entrée (10) et canal de sortie (20).

5. Filtre à particules au plasma selon l'une quelconque des revendications précédentes, **caractérisé en ce que** les canaux (10, 20) ayant leur section transversale à symétrie à double faisceau ont une géométrie en quadrilatère, les deux électrodes (41, 42) étant disposées à des coins opposés de la géométrie en quadrilatère.

6. Filtre à particules au plasma selon la revendication 5, **caractérisé en ce que** la géométrie en quadrilatère est un losange orienté à la verticale.

7. Filtre à particules au plasma selon la revendication 6, des électrodes étant disposées à des coins diagonalement opposés de plusieurs sections transversales voisines de canaux en forme de losanges,
**caractérisé en ce que** aux coins de canaux d'entrée (10) voisins, les électrodes (41, 42) sont câblées avec la même polarité.

8. Filtre à particules au plasma selon l'une quelconque des revendications 1 à 5, **caractérisé en ce que** la section transversale du canal d'entrée (10) ayant une géométrie à double faisceau a une géométrie (nx4)angulaire, avec n≥2, que l'on obtient par déformation de la section transversale en forme de quadrilatère du canal d'entrée (10) en immobilisant (Fig.5) les électrodes (41, 42) et la première ligne de symétrie (60).
